# EUROPEAN PATENT SPECIFICATION

(11) **EP 1 338 498 B1**
(45) Date of publication and mention of the grant of the patent: **02.01.2008**
(21) Application number: 03380033.5
(22) Date of filing: 19.02.2003
(51) Int. Cl.: B62J 9/00, B62J 7/08

(54) **Closure and securing mechanism for motorcycle panniers and the like**
Schliess- und Haltemechanismus für Motorradkoffer
Mécanisme de fermeture et de serrage de coffres pour motocyclettes

(30) Priority: 21.02.2002 ES 200200414
(43) Date of publication of application: 27.08.2003
(73) Proprietor: NAD, S.A., 08100 Mollet del Valles (ES)
(72) Inventor: Lucia Monforte, Pedro, 08100 Mollet del Valles (Barcelona) (ES)
(74) Representative: Ponti Sales, Adelaida

(56) References cited:
- EP-A- 0 517 265
- EP-A- 0 709 282
- EP-A- 0 709 283
- ES-A- 2 126 438

## Description

This invention relates to a closure and securing mechanism for motorcycle cases and the like, of the type in which a lock is used to block and unblock at will the closure system of the case and the attachment of the case to a support base of the case which is attached to the frame of the motorcycle. A closure and securing mechanism according to the preamble of claim 1 is shown by EP 0 709 282 A1.

### BACKGROUND OF THE INVENTION

Known in the art are various types of devices and mechanisms for closure and securing of motorcycle cases, which include a single lock which blocks and unblocks the cover closure system.

More specifically, patent of invention no. ES 2 126 438 A1 discloses a closure and securing mechanism of this type which comprises a plate articulated onto a tray with an upper projecting piece in the form of a handgrip, associated to a retaining rod on a cog attached to a base. The plate bears a lock with two catches, the first for securing a hook-piece which in turn secures the lid. The piece bears a lower projecting piece in the form of a handgrip which includes a fin. The other catch is clamped on the fin attached to the tray.

In broad outline, the mechanism described as well as other mechanisms known prior to that in the art can prove to be rather complex. Moreover, both hands generally have to be used to open the lid, one of them to release the cover of the closure device and the other to lift the lid in relation to the tray.

### DESCRIPTION OF THE INVENTION

The objective of the closure and securing mechanism of this invention is to solve the disadvantages presented by the devices and mechanisms known in the art, while also providing a number of advantages which are described below.

The closure and securing mechanism of the invention according to claim 1 is of the type for motorcycle cases and the like which include a rigid tray and a lid articulated onto each other, with a lock incorporated into an oscillating, a hand operated front plate, which is in turn associated to a retaining device on a cog which is attached to and projects from the frame of the motorcycle or the like, on which the case rests, the lock being provided with at least one catch which blocks a device for closing and opening the lid.

The lid closure and opening device comprises an oscillating front piece, articulated onto the tray, which includes an upper projecting piece in the form of a hook associated to an inset formation of the lid and a lower projecting piece associated to the catch of the lock, said front piece having elastic means for executing the oscillating movement to open the lid, and in that the retaining device comprises a movable element associated at one end to the cog and articulated by its opposite end on the lower part of the front plate, the point of rotation of the front plate for releasing the aforesaid cog being on the lower part of the plate being above the movable element, and including elastic means for return of the front plate to its initial position.

Thanks to thecharacteristics as defined in claim 1 a closure and securing mechanism is achieved which is ergonomic and easily embodied compared with the mechanisms described in the background art, since the closure mechanism of the invention comprises elements such as a single frontal piece on the closure and opening device which facilitates opening of the lid in relation to the tray in a single manoeuvre and using only one hand, making the operation quicker and simpler. Similarly, the lid is closed with a single manoeuvre since closure is implemented by pressure.

The exterior wall of the tray comprises a projecting piece on which the catch of the lock rests when in closed position, leaving the front plate and the front piece blocked in closed position.

### BRIEF DESCRIPTION OF THE DRAWINGS

In order to facilitate the description of all that has been outlined above, some drawings are attached which show, schematically and solely by way of non-restrictive example, a practical case of embodiment of the closure and securing mechanism of the invention, in which:
Figure 1 is a perspective view of a case closed with the mechanism of this invention;
Figure 2 is a detailed side-elevation cross-section view of the case in closed arrangement in the zone pertaining to the closure and securing mechanism;
Figure 3 is a detailed side-elevation cross-section view of the closure and securing mechanism with the lower retaining device released, and;
Figure 4 is a is a detailed side-elevation cross-section view of the upper closure and securing mechanism in a lid opening position.

### DESCRIPTION OF A PREFERRED EMBODIMENT

The closure and securing device of this invention is for cases for attachment to a case support base attached to the frame of the motorcycle, which case comprises a rigid tray 1 and a lid 2 articulated onto said tray 1 at its rear part by means of a hinge. The case has a rigid handle 3 which forms part of the lid 2 itself, situated in front of a complementary opening 4 of the lid 2 which facilitates insertion of the hand when opening and lifting the lid 2 of the case.

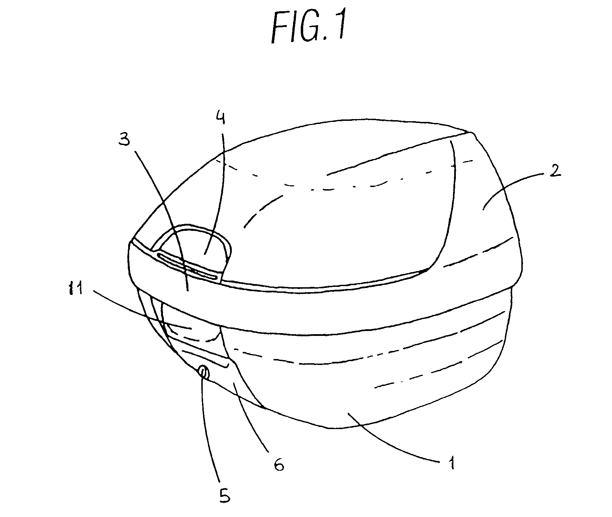

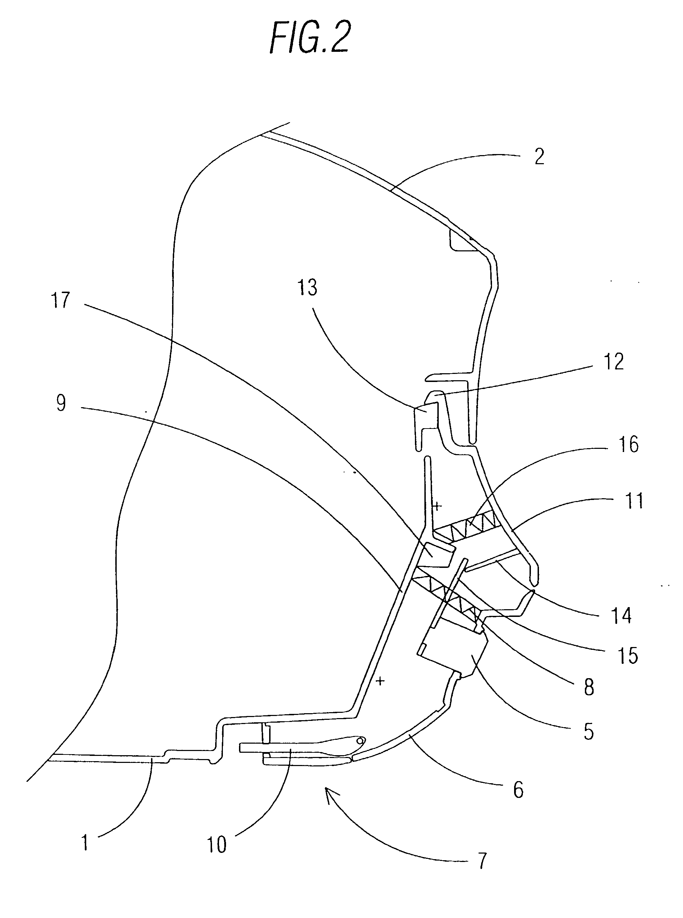

As Figure 2 shows, the closure and securing mechanism of easy embodiment comprises a lock 5 incorporated into an oscillating front plate 6 which can be actuated manually, which is in turn linked to a retaining device 7 on a cog (not shown) which is attached to and projects from the frame of the motorcycle or the like, on which the case shown in Figure 1 rests.

The front plate 6 has an oscillating movement thanks to the presence of a helicoidal spring 8 resting on the wall 9.

The aforesaid retaining device 7 comprises the moving element 10 associated at one end to the cog on the frame of the motorcycle and articulated by its opposite end onto the lower part of the front plate 6, the point of rotation of the front plate 6 being for detaching the cog on the lower part of the plate 6 above the movable element 10 which includes the helicoidal spring 8 for return of the plate 6 to its initial position when manual pressure on the plate 6 is no longer applied. Figures 2-4 show in detail the movement of the element 10 and the other elements associated to it.

The upper part of the closure and opening device of the invention comprises an oscillating front piece 11 articulated onto the tray 1, which comprises an upper projecting piece 12 of hooked shape associated to an inset formation 13 of the lid 2 and a lower projecting piece 14 associated to an upper catch 15 of the lock 5. The front piece 11 has a spring 16 for executing the oscillating movement for opening of the lid 2.

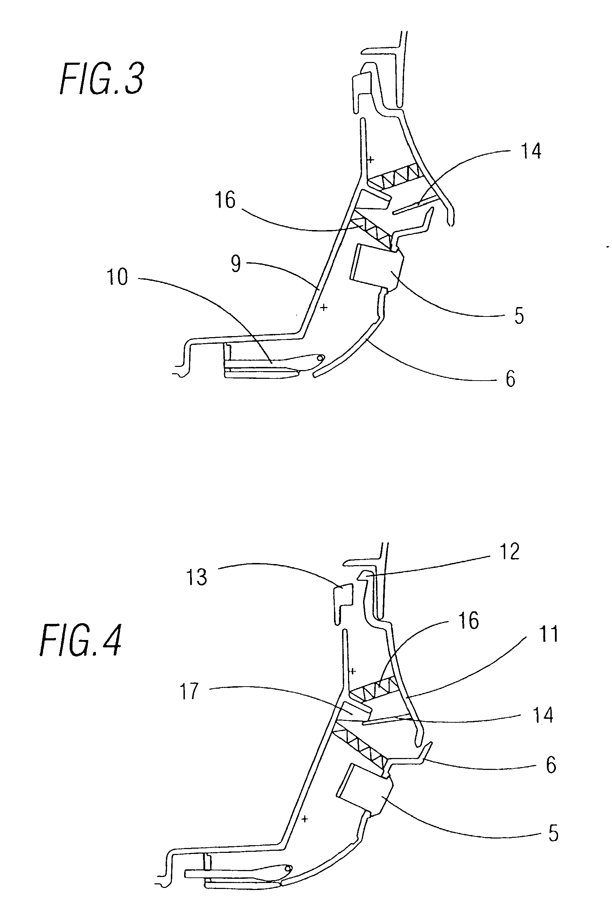

Figure 4 shows the device of the invention in opening position. In order to carry out the opening operation the catch 15 is first made to rotate by means of the key pertaining to the lock 5. As the aforesaid catch 15 rotates the projecting piece 14 is released so that when pressure is exerted with a finger on the lower part of the front piece 11 the upper projecting piece 12 detaches from the inset formation 13 and the lid 2 can be raised.

The exterior wall of the tray 1 includes a lug 17 on which the catch 15 of the lock rests when in closed position, leaving the front plate 6 and the front piece 11 blocked in closed position.

By rotating the catch 15 again the lid 2 is kept closed as shown in Figure 2.

With the mechanism of the invention the user of the case can separate the lid 2 from the tray 1 and lift the lid using only one hand. Furthermore, slotting in and securing of the lid 2 is carried out simply by pressing the lid 2 down towards the tray without exerting undue force.

Independent of the object of this invention are the materials used for manufacturing the elements making up the closure and securing mechanism for cases described above, together with the shapes and dimensions thereof and all accessory details which might be presented, which can be replaced by others which are technically equivalent, as long as they do not affect its essential nature nor depart from the sphere defined by the claims attached below.

## Claims

1. Closure and securing mechanism for motorcycle cases and the like, which includes a rigid tray (1) and a lid (2) articulated onto each other, with a lock (5) incorporated into an oscillating, hand operated front plate (6) which is in turn associated to a retaining device (7) on a cog which is attached to and projects from the frame of the motorcycle and the like, on which the case rests in use the retaining device (7) comprises a movable element (10) associated at one end to the cog and articulated by its opposite end on the lower part of the front plate (6), the lock (5) being provided with at least one catch (15) which blocks the closure and opening device of the lid (2), **characterised in that** the lid (2) closure and opening device comprises a single oscillating front piece (11), articulated onto the tray (1), the front piece includes an upper projecting piece (12) in the form of a hook associated to an inset formation (13) of the lid (2) and a lower projecting piece (14) attached to the catch (15) of the lock (5), said front piece (11) having elastic means for executing the oscillating movement to open the lid (2), the point of rotation of the front plate (6) for releasing the aforesaid cog being on the lower part of the plate above the movable element (10), and including elastic means for return of the front plate (6) to its initial position.

2. Closure and securing mechanism for cases, according to claim 1, **characterised in that** the exterior wall of the tray (1) comprises a projecting piece (17) on which the catch (15) of the lock (5) rests when in closed position, leaving the front plate (6) and the front piece (11) blocked in closed position.

## Patentansprüche

1. Schließ- und Haltemechanismus für Motorradkoffer und dergleichen, welcher eine starre Wanne (1) und einen Deckel (2) umfasst, die miteinander gelenkig verbunden sind, mit einem Schloss (5), das in eine oszillierende, von Hand betätigte Frontplatte (6) eingebracht ist, die ihrerseits mit einer Rückhaltevorrichtung (7) verbunden ist, auf einem Zahn, der mit dem Rahmen des Motorrads und dergleichen verbunden ist und davon vorsteht, an dem der Koffer bei Benutzung verbleibt, wobei die Rückhaltevorrichtung (7) ein bewegliches Element (10) aufweist, das an einem Ende mit dem Zahn verbunden ist und mit ihrem entgegengesetzten Ende am unteren Abschnitt der Frontplatte (6) gelenkig angeordnet ist, wobei das Schloss (5) mit wenigstens einer Falle (15) versehen ist, die die Schließ- und Öffnungsvorrichtung des Deckels (2) blockiert,
**dadurch gekennzeichnet,**
**dass** die Schließ- und Öffnungsvorrichtung des Deckels (2) ein einziges oszillierendes Frontstück (11) aufweist, das gelenkig an der Wanne (1) angebracht ist, wobei das Frontstück ein oberes vorspringendes Stück (12) in der Form eines Hakens, zugehörig einer Einsatzeinrichtung (13) des Deckels (2) und ein unteres vorspringendes Stück (14) umfasst, das an der Falle (15) des Schlosses (5) befestigt ist, wobei das Frontstück (11) eine Federeinrichtung aufweist, zur Ausführung der oszillierenden Bewegung, um den Deckel (2) zu öffnen, wobei der Drehpunkt der Frontplatte (6) zum Lösen des vorgenannten Zahnes sich an dem unteren Abschnitt der Platte oberhalb des beweglichen Elements (10) befindet, und eine Federeinrichtung umfasst, um die Frontplatte (6) in ihre Ausgangsposition zurückzubringen.

2. Schließ- und Haltemechanismus für Koffer nach Anspruch 1, **dadurch gekennzeichnet, dass** die Außenwand der Wanne (1) ein Vorsprungteil (17) aufweist, auf dem die Falle (15) des Schlosses (5) ruht, wenn sie sich in der geschlossenen Stellung befindet, wobei sie die Frontplatte (6) und das Frontstück (11) in geschlossener Position geblockt lässt.

## Revendications

1. Mécanisme de fermeture et de fixation pour des caissons de motos et autres, qui comprend un plateau rigide (1) et un couvercle (2) articulés l'un par rapport à l'autre, avec une serrure (5) intégrée dans une plaque frontale (6) oscillante et actionnée manuellement, qui est associée à un dispositif de retenue (7) sur une crémaillère qui est fixée et qui dépasse du châssis de la moto et autre, sur laquelle le caisson repose lors de l'utilisation, le dispositif de retenue (7) comprend un élément mobile (10) associé à une extrémité de la crémaillère et articulée au niveau de son extrémité opposée sur la partie inférieure de la plaque frontale (6), la serrure (5) étant munie d'au moins un cliquet (15) qui bloque le dispositif de fermeture et d'ouverture du couvercle (2), **caractérisé en ce que** le dispositif de fermeture et d'ouverture du couvercle (2) comprend une seule pièce frontale oscillante (11) articulée sur le plateau (1), cette pièce frontale comprend une pièce supérieure en saillie (12) sous la forme d'un crochet associé à une formation interne (13) du couvercle (2) et une pièce inférieure en saillie (14) fixée au cliquet (15) de la serrure (5), ladite pièce frontale (11) comprenant des moyens élastiques permettant d'exécuter un mouvement oscillant afin d'ouvrir le couvercle (2), le centre de rotation de la plaque frontale (6) pour libérer ladite crémaillère se trouvant sur la partie inférieure de la plaque au-dessus de l'élément mobile (10) et comprenant des moyens élastiques pour faire revenir la plaque frontale (6) vers sa position initiale.

2. Mécanisme de fermeture et de fixation pour des caissons, selon la revendication 1, **caractérisé en ce que** la paroi extérieure du plateau (1) comprend une pièce en saillie (17) sur laquelle le cliquet (15) de la serrure (5) s'appuie dans la position fermée, laissant la plaque frontale (6) et la pièce frontale (11) bloquées en position fermée.
